# EUROPÄISCHE PATENTANMELDUNG

(11) **EP 4 579 111 A1**
(43) Veröffentlichungstag der Anmeldung: **02.07.2025**
(21) Anmeldenummer: 23220834.8
(22) Anmeldetag: 29.12.2023
(51) Int. Cl.: F16L 5/10, H02G 3/22

(54) **DICHTUNG ZUM ENDSEITIGEN ABDICHTEN EINES BAUTEILABSCHNITTS**

(71) Anmelder: DOYMA GmbH & Co, 28876 Oyten (DE)
(72) Erfinder: Meinders, Jan, 28879 Grasberg (DE)
(74) Vertreter: Eisenführ Speiser

(57) **Zusammenfassung**

Die Erfindung betrifft eine Dichtung (10) zum endseitigen Abdichten eines zylindrischen Bauteilabschnitts (26) eines Bauteils (12, 12'), wobei das Bauteil (12, 12') zum Durchführen einer oder mehrerer Leitungen eingerichtet ist, mit einem zylindrischen Grundkörper (14), der eine oder mehrere Dichttüllen (16, 16') zum Abdichten des Grundkörpers (14) gegenüber der oder den durch das Bauteil (12, 12') geführten Leitung(en) aufweist, wobei der Grundkörper (14) entlang seines Umfangs (18) einen umlaufenden Umstülpkragen (20) aufweist, welcher dazu eingerichtet ist, von einer von dem zylindrischen Bauteilabschnitt (26) abgewandten Montagestellung in eine dem zylindrischen Bauteilabschnitt (26) zugewandte Abdichtstellung umgestülpt zu werden, und sich in der Abdichtstellung an den zylindrischen Bauteilabschnitt (26) anzulegen.

## Beschreibung

Die Erfindung bezieht sich auf eine Dichtung zum endseitigen Abdichten eines zylindrischen Bauteilabschnitts eines Bauteils, wobei das Bauteil zum Durchführen einer oder mehrerer Leitung(en) eingerichtet ist, mit einem zylindrischen Grundkörper, der eine oder mehrere Dichttüllen zum Abdichten des Grundkörpers gegenüber der oder den durch das Bauteil geführten Leitung(en) aufweist.

Im Stand der Technik sind solche Dichtungen bekannt, die häufig im Endbereich eines üblicherweise bauwerkseitig angeordneten oder montierbaren Bauteils angeordnet werden. Mittels einer solchen Dichtung erfolgt eine Abdichtung zwischen dem Bauteil, das insbesondere als eine Rohrdurchführung oder als Hautabdichtung ausgebildet sein kann, und einer oder mehreren sich durch das Bauteil erstreckenden Leitung/Leitungen. Unter einer Leitung sind vorliegend sowohl elektrische Leitungen als auch medienführende Leitungen, wie etwa Gas- oder Wasserleitungen, zu verstehen. Die Leitungen werden mithilfe des bauwerkseitig angeordneten oder vormontierten Bauteils zum Beispiel durch eine Öffnung in einem Dach-, Wand- oder Deckenbereich eines Gebäudes geführt oder auch durch Erdreich hin zu einem Installationsort verlegt.

Insbesondere das Montieren einer solchen Dichtung am Endbereich des Bauteils sowie die abdichtende Anbindung zwischen dem Bauteil und den hindurchgeführten Leitungen gestaltet sich oft aufwändig wie auch schwierig.

Daher lag der vorliegenden Erfindung die Aufgabe zugrunde, eine Dichtung zum endseitigen Abdichten eines Bauteils aufzuzeigen, mit deren Hilfe eine vereinfachte Montage der Dichtung am Bauteil und zudem eine zuverlässige abdichtende Anbindung an das Bauteil wie auch an die durch das Bauteil hindurchgeführten Leitungen möglich ist.

Die Erfindung löst die ihr zugrundeliegende Aufgabe bei einer Dichtung zum endseitigen Abdichten eines Bauteils mit den Merkmalen nach Anspruch 1. Insbesondere weist der Grundkörper entlang seines Umfangs einen umlaufenden Umstülpkragen auf, welcher dazu eingerichtet ist, von einer von dem zylindrischen Bauteilabschnitt abgewandten Montagestellung in eine dem zylindrischen Bauteilabschnitt zugewandte Abdichtstellung umgestülpt zu werden, und sich in der Abdichtstellung an den zylindrischen Bauteilabschnitt anzulegen.

Die Erfindung verfolgt mit Vorsehen eines Umstülpkragens am Grundkörper vorliegend den Ansatz, eine Art Stülpendkappe anzugeben, mittels derer eine vereinfachte endseitige Abdichtung zwischen der Dichtung selbst und dem damit in Anlage zu bringenden Bauteil erzielt ist. Der Umstülpkragen wird vorzugsweise nach dem in Kontaktbringen der Dichtung mit dem Bauteil, insbesondere einem Aufsetzen des Grundkörpers auf den Endabschnitt des bauwerkseitig angeordneten oder montierbaren Bauteils, und dem in Kontaktbringen der am Grundkörper angeordneten Dichttülle(n) mit der oder den Leitung(en) von seiner Montagestellung in die Abdichtstellung überführt. Das Überführen des Umstülpkragens von der Montagestellung in die Abdichtstellung erfolgt mittels einer Umstülpbewegung bzw. eines Umschlagens des Umstülpkragens am Grundkörper. Der Umstülpkragen wird dabei von einer Seite des Grundkörpers, die vom zylindrischen Bauteilabschnitt abgewandt ist, auf eine Seite des Grundkörpers umgestülpt bzw. umgeschlagen, die dem zylindrischen Bauteilabschnitt des Bauteils zugewandt ist. Der Umstülpkragen, der dann außenseitig über den Endabschnitt des zylindrischen Bauteilabschnitts übersteht, liegt an der Außenseite des Bauteilabschnitts an, vorzugsweise abdichtend. Das Abdichten des Umstülpkragens gegenüber der Außenseite des zylindrischen Bauteilabschnitts kann in einer möglichen Ausführung mithilfe eines Kabelbinders oder einer Rohrschelle vorgenommen oder unterstützt werden. Besonders bevorzugt wird der Umstülpkragen in der Abdichtstellung aufgrund seiner dichtenden Anlage am Bauteil zugleich eine mechanische Haltekraft auf das Bauteil ausüben. Die Dichtung kann damit werkzeuglos in die Abdichtstellung verbracht werden, und hält sich vorzugsweise spannmittelfrei selbsttätig an dem Bauteil. Hierdurch wird eine einfache Handhabung erreicht, ohne dass bei der Belegung der Dichttülle oder Dichttüllen bestehen hierdurch Einschränkungen in Kauf zu nehmen sind. Mittels des Umstülpkragens erfolgt neben der Abdichtung zudem eine einfache Arretierung der Dichtung im Endbereich des Bauteils.

Die Dichtung ist zum Einsatz für außen am Gebäude oder dachseitig auf dem Gebäude, sowohl auf Flachdächern als auch an Dachschrägen, auf Garagendächern, Schornsteinen oder Schornsteinsockeln geeignet und wird vorzugsweise dazu verwendet.

Die Dichtung ist vorzugsweise zur Durchführung von Leitungen für Wärmeübertragersysteme eingerichtet, insbesondere für Wärmepumpenanlagen wie etwa Monoblock- oder Split-Anlagen, und/oder für Solarthermie-, Photovoltaik-, Klima- oder Heizungsanlagen.

Unter einer Hautabdichtung wird erfindungsgemäß eine am Dach, einer Wand oder Decke angebrachte Flächendichtung verstanden, beispielsweise eine schwarze Wanne, eine Dach-, Decken- oder Wandfolie und dergleichen.

Gemäß einer bevorzugten Ausführungsform weist der Umstülpkragen an seinem Kragenende einen elastisch verformbaren Dichtungsring zum umfänglichen Anlegen an den Bauteilabschnitt auf. Mithilfe des am Kragenende des Umstülpkragens elastisch verformbaren Dichtrings ist ein vereinfachtes abdichtendes Zusammenwirken mit dem die Dichtung aufnehmenden Bauteilabschnitt erzielt. Vorzugsweise wird während des Überführens des Umstülpkragens von der Montagestellung in die Abdichtstellung der elastisch verformbare Dichtungsring am Umstülpkragen aufgeweitet, sodass dieser in der Abdichtstellung, also bei über die Außenseite des Bauteilabschnitts umgeklappten Umstülpkragen, durch die Materialdehnung und die sich daraus ergebenden im Dichtungsring wirkenden Rückstellkräfte umlaufend eine Abdichtwirkung an der Außenseite des Bauteilabschnitts erzeugt. Mit dem Dichtungsring am Ende des Umstülpkragens ist eine Abdichtfunktion ohne die Notwendigkeit des Einsatzes von zusätzlichen Fixierteilen oder Befestigungselementen verwirklicht. Vorzugsweise weist der Dichtungsring in der Montagestellung und damit seiner Ausgangslage einen geringeren Durchmesser als der mit dem Dichtungsring in abdichtende Anlage bringbare Bauteilabschnitt auf, wodurch sichergestellt ist, dass sich bei in Anlagebringen des Umstülpkragens mit dem Bauteilabschnitt eine selbsttätige Dichtwirkung einstellt.

Eine Weiterbildung der erfindungsgemäßen Dichtung sieht vor, dass der Umstülpkragen einteilig mit dem Grundkörper ausgebildet ist. Mit dem Vorsehen einer einteiligen Ausgestaltung von Grundkörper und Umstülpkragen und seinem daran ausgebildeten Dichtungsring ist eine konstruktiv einfache Möglichkeit zur Ausgestaltung einer eine hohe Dichtwirkung erzielenden Dichtung ohne das Vorsehen von weiteren mit der Dichtung korrespondierenden zusätzlichen Bauteilen aufgezeigt. Zudem kann durch die Einteiligkeit der Dichtung das Vorsehen gegebenenfalls aufwändig auszugestaltender Verbindungsbereiche zwischen den verschiedenen Abschnitten oder Komponenten der Dichtung vermieden werden. In einer bevorzugten Ausführungsform ist die einteilige Dichtung als Spritzgussteil ausgeführt.

Vorzugsweise weist der Grundkörper auf seiner dem Bauteilabschnitt zugewandten Stirnseite einen Aufnahmeabschnitt zum in Kontaktbringen des Grundkörpers mit dem Bauteilabschnitt auf. Vorzugsweise erfolgt mithilfe des Aufnahmeabschnitts ein gezieltes Ausrichten und das Herstellen eines Kontaktbereiches der Dichtung mit entsprechenden Flächenbereichen des damit in Kontakt zu bringenden Bauteilabschnitts. Mit dem Aufnahmeabschnitt ist zudem eine augenscheinliche Kontrolle über ein passgenaues in Kontaktbringen der Dichtung und dem damit zu versehenden Bauteilabschnitt erzielt. Vorzugsweise ist der Aufnahmeabschnitt am Grundkörper für den damit in Kontakt zu bringenden Bauteilabschnitt im Nahbereich zu dem entlang des Umfangs des Grundkörpers ausgebildeten Umstülpkragens vorgesehen. Vorzugsweise weist der Grundkörper an seiner dem Bauteilabschnitt zugewandten Stirnseite wenigstens eine umlaufende Materialvertiefung oder einen nach außen vorstehenden Materialvorsprung mit daran ausgebildeten Anlageflächen als Aufnahmeabschnitt und Ausrichthilfe auf.

Gemäß einer bevorzugten Ausführungsform ist am Aufnahmeabschnitt des Grundkörpers wenigstens eine mit einer Innenseite des Bauteilabschnitts in Anlage bringbare Dichtlippe vorgesehen. Mit der Dichtlippe ist insbesondere auf der Innenseite des damit in Kontakt bringbaren Bauteilabschnitts eine zweite Dichtungsebene erzeugt, welche die Abdichtwirkung der erfindungsgemäßen Abdichtung gegenüber dem abzudichtenden Bauteilabschnitt weiter verbessert. Vorzugsweise ist die Dichtlippe nahe des äußeren Umfangs des Dichtkörpers angeordnet, wobei die am Grundkörper abstehende Dichtlippe neben einer Abdichtwirkung zusätzlich eine Ausrichtfunktion an dem mit der Dichtung in Kontakt bringbaren Bauteil erfüllt. Die Dichtlippe erstreckt sich bezogen auf eine den Mittenbereich des Grundkörpers definierende Längsachse insbesondere in radialer Richtung nach außen sowie auch in axialer Richtung von der dem Bauteilabschnitt zugeordneten Stirnseite des Grundkörpers weg. In Verbindung mit der Dichtfunktion des Umstülpkragens ergeben sich auf diese Weise gegenüber dem Bauteil ohne zusätzlichen Montageaufwand zwei Dichtebenen, eine innere und eine äußere.

In einer weiteren bevorzugten Ausführungsform weist die Dichtung innenseitig an dem Umstülpkragen im Aufnahmeabschnitt wenigstens einen weiteren Dichtvorsprung auf, der dazu eingerichtet ist, endseitig mit dem aufzunehmenden Bauteil in dichtende Anlage gebracht zu werden. Sofern diese Ausführungsform gemeinsam mit dem Umstülpkragen und der dem Umstülpkragen bezogen auf das Bauteil gegenüberliegenden Dichtlippe umgesetzt wird, lassen sich ohne weiteren Montageaufwand gleich drei Dichtebenen relativ zu dem Bauteil erreichen.

In einer möglichen Ausführungsform der Dichtung steht die Dichttülle an zumindest einer Stirnseite des im Wesentlichen scheibenförmig ausgebildeten Grundkörpers ab, wodurch das Abdichten mit einer Außenseite einer durch die Dichttülle hindurchgeführten Leitung vereinfacht ist. Die insbesondere senkrecht am Grundkörper abstehende Dichttülle ermöglicht ein vereinfachtes Ausgleichen von möglichen Abweichungen in radialer Richtung der Leitung/Leitungen zu der Dichttülle/den Dichttüllen am Grundkörper. Auch etwaige Abweichungen in der Winkelausrichtung der Leitung/den Leitungen und der Dichttülle/den Dichttüllen lassen sich durch das senkrechte Abstehen der Dichttüllen am Grundkörper vereinfacht ausgleichen. In einer möglichen Ausgestaltung weist jede Dichttülle am Grundkörper in Erstreckungsrichtung eine im Wesentlichen zylindrische Ausgestaltung auf. Für eine wirksame Abdichtung gegenüber einer durch die Dichttülle hindurchgeführten Leitung weist die Dichttülle einen freien Innenquerschnitt auf, der geringer ist als der Querschnitt der durch die Dichttülle hindurchgeführten Leitung.

Gemäß einer bevorzugten Ausgestaltung der Dichtung weist die Dichttülle wenigstens einen konischen Hülsabschnitt auf. Mit der konischen Ausgestaltung können an der Dichttülle Leitungen mit einem Leitungsdurchmesser aufgenommen werden, der in einem größeren Bereich variiert. Somit ergibt sich für eine derartig ausgebildete Dichtung ein breiteres Einsatzspektrum. Vorzugsweise können durch die konische Ausgestaltung an der Dichttülle Leitungen abdichtend aufgenommen werden, deren Durchmesser in einem Bereich von etwa 10 mm voneinander abweichen kann.

Eine mögliche Weiterbildung der Erfindung sieht vor, dass die Dichttülle mehrere, vorzugsweise über Materialschwächungen in Reihe hintereinander verbundene, Dichtabschnitte für verschieden große Leitungsdurchmesser aufweist. Damit ist das Hindurchführen verschieden großer Leitungsdurchmesser einer sich durch die Dichttülle erstreckenden Leitung weiter vereinfacht. Mit den hintereinander angeordneten, insbesondere abtrennbaren Dichtabschnitten ist der Aufnahmebereich an der Dichttülle für die hindurchführbare Leitung weiter vergrößert. Jeder Dichtabschnitt ist einem definierten Durchmesserbereich einer durch die Dichttülle hindurchgeführten Leitung zugeordnet und kann eine den Durchmesserbereich entsprechende Kennzeichnung aufweisen. Die hintereinander angeordneten Dichtabschnitte sind über als Solltrennstellen ausgebildete Schwächungen miteinander verbunden. Mittels der Solltrennstellen ist ein werkzeugfreies Trennen eines oder mehrerer Dichtabschnitte von der zum Abdichten gegenüber der Leitung vorgesehenen Dichttülle erzielt.

Gemäß einer bevorzugten Ausführungsform ist wenigstens eine der Dichttüllen mittels eines heraustrennbaren Blindstopfens verschlossen. Vorzugsweise weist jede der am Grundkörper etwa senkrecht zu diesem abstehende Dichttülle einen solchen Blindstopfen auf, sodass bei Nichtgebrauch der Dichttülle für das Hindurchführen einer Leitung ein grundsätzlich abdichtender Verschluss des Grundkörpers vorliegt. Der Blindstopfen verläuft vorzugsweise parallel zum Grundköper der Dichtung, wobei ein jeweiliger Blindstopfen ein Mindestmaß für einen an jeder Dichttülle freizugebenden Leitungsquerschnitt definiert. Zudem ist der Dichtstopfen vorzugsweise an jedem zum Grundkörper beabstandeten Ende einer Dichttülle angeordnet und über eine Materialschwächung mit der insbesondere konisch ausgebildeten Dichttülle verbunden. Auch der Blindstopfen kann ohne großen Kraftaufwand und werkzeugfrei an einer jeweiligen Dichttülle herausgetrennt werden.

Vorzugsweise sind mehrere am Grundkörper etwa senkrecht abstehende Dichttüllen vorgesehen, welche untereinander über Verbindungsstege verbunden sind. Die sich vorzugsweise über nahezu die Gesamtlänge der Dichttüllen erstreckenden Verbindungsstege verleihen den Dichttüllen am Grundkörper zueinander und damit der Dichtung insgesamt eine erhöhte Formstabilität. Damit ist einem unerwünschten Verformen der Dichtung bei deren Verwendung entgegengewirkt. Durch die erhöhte Formstabilität der Dichtung ist auch ein fester Sitz der Dichtung nach ihrer Montage am jeweils zugeordneten Bauteilabschnitt an insbesondere einem Endbereich eines abzudichtenden Bauteils bewirkt. Die Verbindungsstege verlaufen insbesondere in Erstreckungsrichtung der Dichttüllen und damit etwa parallel zur Längsachse des Grundkörpers.

In einer Ausführung der Erfindung verlaufen die Verbindungsstege unmittelbar geradlinig zwischen den Hülsabschnitten der Dichttüllen. Optional sind Verbindungsstege vorgesehen, die kreisbogenförmig zwischen zwei Hülsabschnitten einander benachbarter Dichttüllen verlaufen. In einer Ausführung können zwei Dichttüllen auch über mehrere Verbindungsstege miteinander verbunden sein.

Vorzugsweise haben wenigstens zwei Dichttüllen Wandungsbereiche an ihren Hülsabschnitten, die oberhalb oder auf Höhe des Dichtkörpers ineinander übergehen. Zum einen ist damit eine platzsparende Anordnung von mehreren Dichttüllen am Grundkörper der Dichtung möglich, sodass mehr solcher senkrecht am Grundkörper abstehender Dichttüllen ausgebildet werden können als bei einer klassischen Anordnung, in der die Dichttüllen an ihrem Grund einen vorbestimmten Abstand zueinander haben. Dadurch, dass Wandungsbereiche mehrerer Dichttüllen ineinander übergehen, wird die Festigkeit des Grundkörpers weiter erhöht bzw. kann der Grundkörper bei gleicher Formstabilität mit einer verringerten Materialstärke ausgeführt werden. Dadurch ist eine nicht unerhebliche Materialeinsparung bei der Ausgestaltung des Grundkörpers erzielt, die jedoch diesem in seinem Umfangsbereich gleichzeitig eine vorteilhafte Flexibilität beim erfindungsgemäßen Umstülpen bzw. Umschlagen des Umstülpkragens am Grundkörper verleiht.

In einer möglichen Ausführung erstrecken sich die am Dichtkörper abstehenden Dichttüllen zu beiden Stirnseiten des Dichtkörpers, wobei die Dichttüllen, die auf der dem Bauteilabschnitt zugewandten Stirnseite abstehen, eine rein zylindrische Ausgestaltung haben können und insbesondere Wandungsbereiche haben, die über ihre gesamte Länge einen gemeinsamen Wandungsbereich ausbilden. Damit ist die Stabilität des Grundkörpers weiter erhöht.

Eine Weiterbildung der Dichtung sieht vor, dass der Grundkörper dazu eingerichtet ist, vor einem Dach-, Wand- oder Deckenbereich, in oder an dem das abzudichtende, insbesondere zylindrische Bauteil aufgenommen ist, positioniert zu werden. Die Dichtung wird vorzugsweise im Abstand zu einem Dach-, Wand- oder Deckenbereich angeordnet und dichtet vorranging ausschließlich gegenüber einer sich durch den Dach-, Wand- oder Deckenbereich erstreckenden Rohrdurchführung oder gegenüber einer am Dach-, Wand- oder Deckenbereich vorgesehenen Hautabdichtung bzw. einem mit der Hautabdichtung korrespondierenden Formbauteil ab. Die erfindungsgemäße Dichtung wird am Ende eines bauwerkseitig angeordneten oder montierbaren Bauteils angeordnet und übergreift mit seinem Umstülpkragen die Außenseite des Bauteilabschnitts in axialer Richtung um ein vorbestimmtes Überdeckungsmaß, welches vorzugsweise in einem Bereich von bis zu 100 mm liegt, weiter vorzugsweise in einem Bereich von bis zu 50 mm liegt.

Gemäß einer bevorzugten Ausführung ist der Grundkörper, und sind insbesondere die am Grundkörper angeformten Dichttüllen und der Umstülpkragen aus einem elastisch verformbaren Material ausgebildet. Damit ist das erfindungsmäße Umstülpen des Umstülpkragens am Dichtkörper von der Montagestellung in die Abdichtstellung auf einfache Weise ermöglicht. Ferner ist neben einer zuverlässigen Abdichtwirkung der Dichtung gegenüber dem damit abzudichtenden Bauteil wie auch gegenüber der mindestens einen durch das Bauteil hindurchzuführenden Leitung ein Anpassen des Umstülpkragens an geringfügig variierende Querschnitte der damit in Anlage zu bringenden Bauteile möglich. Vorzugsweise wird als Material ein Elastomer, wie beispielsweise Natur- oder Silikonkautschuk, eingesetzt.

Die Erfindung ist vorstehend in einem ersten Aspekt unter Bezugnahme auf die Dichtung selbst beschrieben worden. In einem zweiten Aspekt betrifft die Erfindung ferner eine Verwendung einer Dichtung, die einen zylindrischen Grundkörper aufweist, der eine oder mehrere Dichttüllen zum Abdichten des Grundkörpers gegenüber der oder den durch das Bauteil geführten Leitung(en) aufweist, wobei der Grundkörper entlang seines Umfangs einen umlaufenden Umstülpkragen aufweist, welcher dazu eingerichtet ist, von einer von dem zylindrischen Bauteilabschnitt abgewandten Montagestellung in eine dem zylindrischen Bauteilabschnitt zugewandte Abdichtstellung umgestülpt zu werden, und sich in der Abdichtstellung an den zylindrischen Bauteilabschnitt anzulegen,
zum endseitigen Abdichten eines zylindrischen Bauteilabschnitts eines Bauteils, wobei das Bauteil zum Durchführen einer oder mehrerer Leitungen eingerichtet ist. Die verwendete Dichtung ist vorzugsweise eine Dichtung nach einer der vorstehend beschriebenen bevorzugten Ausführungsformen des ersten Aspekts

Die Erfindung macht sich im zweiten Aspekt dieselben Vorteile und Erwägungen zunutze wie beim ersten Aspekt. Bevorzugte Ausführungsformen des ersten Aspekts sind zugleich bevorzugte Ausführungsformen des zweiten Aspekts und umgekehrt, weshalb zur Vermeidung von Wiederholungen diesbezüglich auf die obigen Ausführungen verwiesen wird.

Die Erfindung wird im Folgenden anhand eines bevorzugten Ausführungsbeispiels unter Bezugnahme auf die beigefügten Figuren näher beschrieben. Hierbei zeigen:
- Fig. 1: eine perspektivische Ansicht einer erfindungsgemäßen Dichtung in ihrer Montagestellung;
- Fig. 2: eine perspektivische Ansicht der Dichtung nach Fig. 1 in ihrer Abdichtstellung mit einem bauwerkseitig angeordneten Bauteil;
- Fig. 3: eine perspektivische Ansicht der Dichtung in ihrer Montagestellung im Schnitt;
- Fig. 4: eine perspektivische Ansicht der Dichtung in ihrer Abdichtstellung mit dem bauwerkseitigen Bauteil im Schnitt, und
- Fig. 5: eine Schnittdarstellung der erfindungsgemäßen Dichtung in ihrer Abdichtstellung in einer weiteren Anwendung.

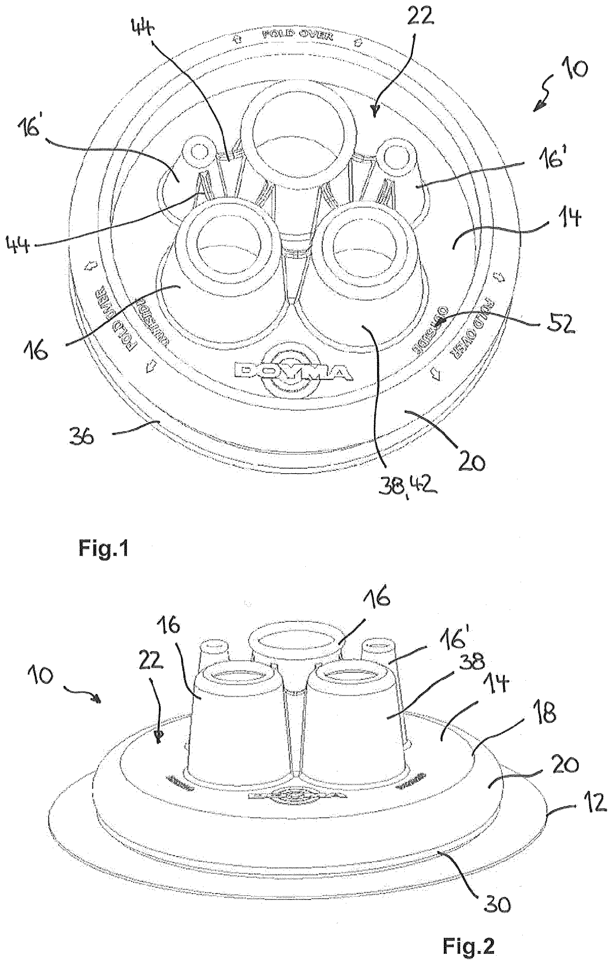

Fig. 1 zeigt eine Dichtung 10 zum endseitigen Abdichten eines bauwerkseitig angeordneten oder montierbaren, insbesondere zylindrischen Bauteils 12, 12' (Fig. 2, 4 und 5), welches beispielsweise in oder an einer nicht näher dargestellten Öffnung in einem Dach-, Wand- oder Deckenbereich eines Gebäudes vorgesehen und zum Durchführen einer oder mehrerer Leitungen eingerichtet sein kann.

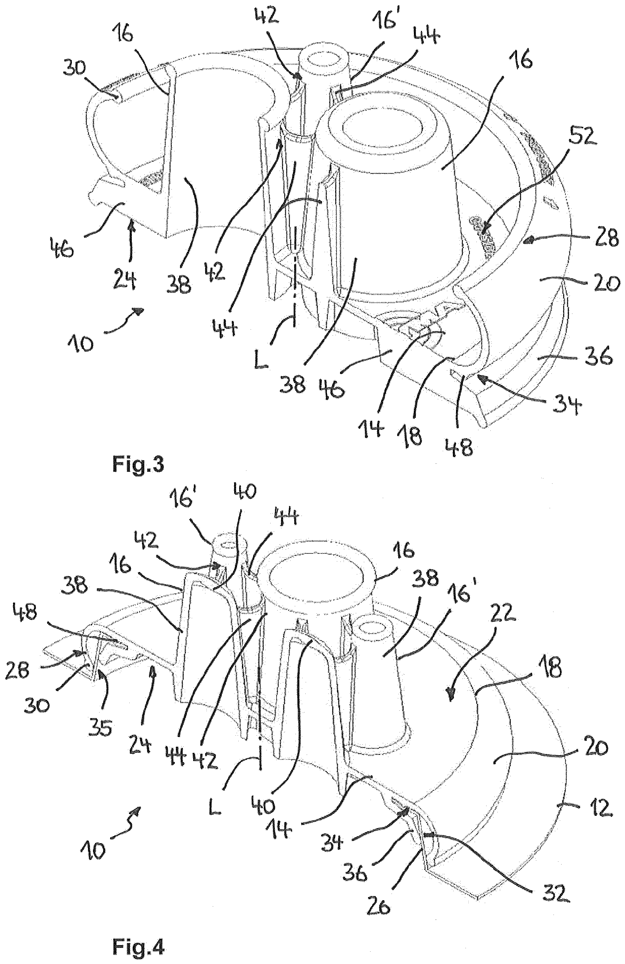

Die Dichtung 10 umfasst einen zylindrischen Grundkörper 14, der eine oder mehrere Dichttüllen 16, 16' zum Abdichten des Grundkörpers 14 gegenüber der oder den durch das Bauteil 12, 12' geführten, nicht gezeigten Leitungen aufweist. Am Grundkörper 14 ist ferner entlang seines Umfangs 18 ein umlaufender Umstülpkragen 20 angeordnet, der in Fig. 1 in einer Montagestellung für die Dichtung 10 gezeigt ist. In der in Fig. 1 gezeigten Montagestellung ist der Umstülpkragen 20 auf einer Stirnseite 22 des Grundkörpers 14 angeordnet, die von einer Stirnseite 24 des Grundkörpers 14 (Fig.3), die mit einem zylindrischen Bauteilabschnitt 26 der in den Figuren 2, 4 und 5 gezeigten Bauteile 12, 12' zusammenwirkt, abgewandt ist.

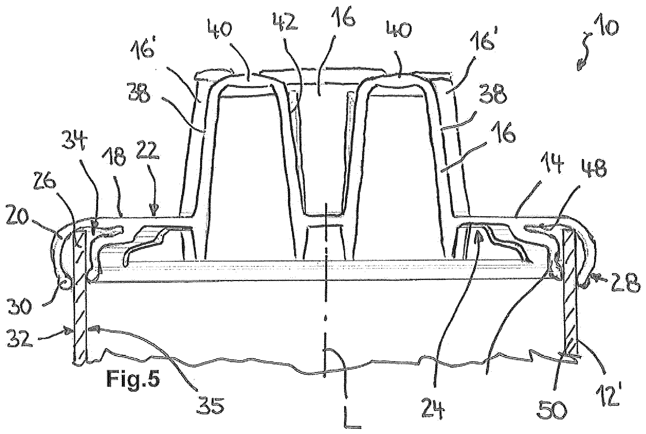

Fig. 2 zeigt die erfindungsgemäße Dichtung 10 in ihrer Abdichtstellung. Um in die Abdichtstellung überführt zu werden, wird der umlaufende Umstülpkragen 20 von der dem zylindrischen Bauteilabschnitt 26 abgewandten Montagestellung (Fig. 5) in seine dem zylindrischen Bauteilabschnitt 26 zugewandte Abdichtstellung umgestülpt. Der Umstülpkragen 18 liegt in der Abdichtstellung zumindest abschnittsweise an dem zylindrischen Bauteil 12 an und erzeugt vorzugsweise eine Abdichtwirkung. In der in Fig. 2 gezeigten Ausführung ist der Umstülpkragen 18 insbesondere dazu eingerichtet, in der Abdichtstellung umfänglich abdichtend mit dem zylindrischen Bauteil 12 zusammenzuwirken.

Die am Grundkörper 14 angeordneten bzw. ausgebildeten Dichttüllen 16, 16' stehen an der Stirnseite 22 des Grundkörpers 14 ab, welche von der Stirnseite 24 abgewandt ist, mit der die Dichtung 10 in Kontakt mit dem Bauteil 12 in Anlage gebracht wird. Die Stirnseite 22 des Grundkörpers 14 weist zudem eine Kennzeichnung 52 auf (vgl. Fig. 3), mittels der die korrekte Montageposition der Dichtung 10 an den damit in Anlage gebrachten Bauteilen 12, 12' (Fig. 5) angegeben wird. Das in Fig. 2 gezeigte Bauteil 12 ist in der vorliegenden Anwendung ein mit einer Hautabdichtung zu verklebendes Formbauteil.

Wie aus der in den Figuren 3 und 4 gezeigten Schnittdarstellungen der Dichtung 10 zu entnehmen, weist der Umstülpkragen 20 an seinem Kragenende 28 einen elastisch verformbaren Dichtungsring 30 auf, der zum abdichtenden Anlegen an eine Außenseite 32 des zylindrischen Bauteilabschnitts 26 (Fig. 4, 5) eingerichtet ist. Der Umstülpkragen 20 ist in der vorliegend gezeigten Ausführung einteilig mit dem etwa scheibenförmigen Grundkörper 14 ausgebildet und verläuft insbesondere konzentrisch um eine Mittenachse L des Grundkörpers 14.

Der Grundkörper 14 weist ferner auf seiner dem Bauteilabschnitt 26 zugewandten Stirnseite 26 einen Aufnahmeabschnitt 34 zum in Kontaktbringen des Grundkörpers 14 mit dem Bauteilabschnitt 26 auf. Der Aufnahmeabschnitt 34 weist wenigstens eine mit einer Innenseite 35 des Bauteilabschnitts 22 in Anlage bringbare Dichtlippe 36 auf. Auch die Dichtlippe 36 ist elastisch verformbar ausgebildet und dichtet mit in Anlagebringen an der Innenseite 35 des Bauteils 12, 12' gegenüber dem Durchtritt von Flüssigkeiten ab.

Wie Fig. 3 und 4 ferner zeigen, sind die Dichttüllen 16, 16' bezogen auf ihren Durchmesser unterschiedlich groß ausgeführt. Dadurch können Leitungen mit verschieden großen Leitungsdurchmessern sicher abgedichtet werden. Insbesondere weisen die Dichttüllen 16, 16' wenigstens einen konischen Hülsabschnitt 38 auf. In einer nicht näher gezeigten Ausführung weist jede Dichttülle 16, 16' mehrere über Materialschwächungen in Reihe hintereinander verbundene Dichtabschnitte für verschieden große Leitungsdurchmesser auf.

Wie Fig. 4 verdeutlicht, ist wenigstens eine der Dichttüllen 16, 16' mittels eines heraustrennbaren Blindstopfens 40 verschlossen, sodass bei Nichtgebrauch der Dichttülle 16, 16' die Dichtung 10 grundsätzlich fluiddicht ausgeführt ist.

Die mehreren am Grundkörper abstehenden Dichttüllen erstrecken sich insbesondere zu beiden Seiten der Stirnseiten 22, 24 des Grundkörpers 14. Zudem sind die Dichttüllen 16, 16' mittels vorbestimmte Wandungsbereiche 42 untereinander verbindende Verbindungsstege 44 verbunden, wodurch die Dichtung 10 an eine erhöhte Formstabilität aufweist. Wie aus Fig. 3 ferner ersichtlich, sind an der Stirnseite 26 des Grundkörpers 14 zumindest mehrere den Grundkörper 14 und teilweise den Aufnahmeabschnitt 34 aussteifende Versteifungselemente 46 vorgesehen.

In einer möglichen, nicht näher gezeigten Ausführung können wenigstens zwei Dichttüllen Wandungsbereiche 42 haben, die oberhalb oder zumindest auf Höhe des Dichtkörpers 14 ineinander übergehen bzw. einander berühren.

Wie aus Fig. 4 ferner ersichtlich, weist die Dichtung 10 neben ihrem Umstülpkragen 20 mit dem daran endseitig angeordneten Dichtungsring 30 und der auf der Stirnseite 26 angeordneten Dichtlippe 36 im Aufnahmeabschnitt wenigstens einen weiteren Dichtvorsprung 48 auf, der mit einem Abschnitt des zylindrischen Bauteilabschnitts 26 bei in Kontaktbringen mit der Dichtung 10 korrespondiert.

Die erfindungsgemäße Dichtung 10 ist mit ihrem Grundkörper 14 grundsätzlich dazu eingerichtet, vor bzw. im Abstand zu einem Dach-, Wand- oder Deckenbereich eines Gebäudes positioniert zu werden. Der Grundkörper 14 sowie die mit dem Grundkörper 14 insbesondere einteilig verbundenen Komponenten sind aus einem elastisch verformbaren Material, insbesondere einem Elastomer ausgebildet. In einer möglichen Ausführung wird die Dichtung 10 mithilfe eines Spritzgussverfahrens hergestellt.

Fig. 5 zeigt eine mögliche weitere Anwendung der erfindungsgemäßen Dichtung 10, welche mit einem Bauteil 12' in Anlage gebracht wird, das als Rohrdurchführung 50, wie z.B. einem Wellrohr, ausgebildet sein kann. Die Rohrdurchführung 48 ist beispielsweise in einer Öffnung eines Dach-, Wand- oder Deckenbereichs einbetoniert. Die Rohrdurchführung 48 kann beispielsweise auch bauwerkseitig im Erdreich um ein Gebäude herum verlegt sein und zum erdgeführten Verlegen von Versorgungsleitungen, beispielsweise von und zu einer Wärmepumpe führenden Fluidleitungen, verwendet werden.

In der vorliegend gezeigten Ausführung gelangen vornehmlich die Dichtlippe 36 mit der Innenseite 35 des Bauteils 12` in Kontakt und der Umstülpkragen 20 mit seinem Dichtungsring 30 mit der Außenseite 32 des als Rohrdurchführung 48 ausgebildeten Bauteils 12' in Kontakt.

Gleiche oder ähnliche Bauteile sind mit denselben Bezugszahlen bezeichnet.

### Bezugszeichenliste

- 10: Dichtung
- 12, 12': Bauteil
- 14: Grundkörper
- 16, 16': Dichttüllen
- 18: Umfang
- 20: Umstülpkragen
- 22, 24: Stirnseite
- 26: Bauteilabschnitt
- 28: Kragenende
- 30: Dichtungsring
- 32: Außenseite
- 34: Aufnahmeabschnitt
- 35: Innenseite
- 36: Dichtlippe
- 38: Hülsabschnitt
- 40: Blindstopfen
- 42: Wandungsbereich
- 44: Verbindungssteg
- 46: Versteifungselement
- 48: Dichtvorsprung
- 50: Rohrdurchführung
- 52: Kennzeichnung
- L: Mittenachse

## Patentansprüche

1. Dichtung (10) zum endseitigen Abdichten eines zylindrischen Bauteilabschnitts (26) eines Bauteils (12, 12'), wobei das Bauteil (12, 12') zum Durchführen einer oder mehrerer Leitungen eingerichtet ist, mit
einem zylindrischen Grundkörper (14), der eine oder mehrere Dichttüllen (16, 16`) zum Abdichten des Grundkörpers (14) gegenüber der oder den durch das Bauteil (12, 12') geführten Leitung(en) aufweist,
**dadurch gekennzeichnet, dass** der Grundkörper (14) entlang seines Umfangs (18) einen umlaufenden Umstülpkragen (20) aufweist, welcher dazu eingerichtet ist, von einer von dem zylindrischen Bauteilabschnitt (26) abgewandten Montagestellung in eine dem zylindrischen Bauteilabschnitt (26) zugewandte Abdichtstellung umgestülpt zu werden, und sich in der Abdichtstellung an den zylindrischen Bauteilabschnitt (26) anzulegen.

2. Dichtung (10) nach Anspruch 1,
**dadurch gekennzeichnet, dass** der Umstülpkragen (20) an seinem Kragenende (28) einen elastisch verformbaren Dichtungsring (30) zum umfänglichen Anlegen an den Bauteilabschnitt (26) aufweist.

3. Dichtung (10) nach Anspruch 1 oder 2,
**dadurch gekennzeichnet, dass** der Umstülpkragen (20) einteilig mit dem Grundkörper (14) ausgebildet ist.

4. Dichtung (10) nach Anspruch 1 bis 3,
**dadurch gekennzeichnet, dass** der Grundkörper (14) auf seiner dem Bauteilabschnitt (26) zugewandten Stirnseite (24) einen Aufnahmeabschnitt (34) zum in Kontaktbringen des Grundkörpers (14) mit dem Bauteilabschnitt (26) aufweist.

5. Dichtung (10) nach Anspruch 4,
**dadurch gekennzeichnet, dass** am Aufnahmeabschnitt (34) des Grundkörpers (14) wenigstens eine mit einer Innenseite (35) des Bauteilabschnitts (26) in Anlage bringbare Dichtlippe (36) vorgesehen ist.

6. Dichtung (10) nach einem der vorstehenden Ansprüche,
**dadurch gekennzeichnet, dass** die Dichttülle (16, 16`) an zumindest einer Stirnseite (22) des im Wesentlichen scheibenförmig ausgebildeten Grundkörpers (14) absteht.

7. Dichtung (10) nach einem der vorstehenden Ansprüche,
**dadurch gekennzeichnet, dass** die Dichttülle (16, 16`) wenigstens einen konischen Hülsabschnitt (38) aufweist.

8. Dichtung (10) nach einem der vorstehenden Ansprüche,
**dadurch gekennzeichnet, dass** die Dichttülle (16, 16`) mehrere über Materialschwächungen in Reihe hintereinander verbundene Dichtabschnitte für verschieden große Leitungsdurchmesser aufweist.

9. Dichtung (10) nach einem der vorstehenden Ansprüche,
**dadurch gekennzeichnet, dass** wenigstens eine der Dichttüllen (16, 16`) mittels eines heraustrennbaren Blindstopfens (40) verschlossen ist.

10. Dichtung (10) nach einem der vorstehenden Ansprüche,
**dadurch gekennzeichnet, dass** mindestens zwei der am Grundkörper (14) abstehenden Dichttüllen (16, 16`) untereinander über einen Verbindungsteg (44) verbunden sind.

11. Dichtung (10) nach einem der vorstehenden Ansprüche,
**dadurch gekennzeichnet, dass** wenigstens zwei Dichttüllen (16, 16') Wandungsbereiche (42) haben, die oberhalb oder auf Höhe des Dichtkörpers (14) ineinander übergehen.

12. Dichtung (10) nach einem der vorstehenden Ansprüche,
**dadurch gekennzeichnet, dass** der Grundkörper (14) dazu eingerichtet ist, vor einem Dach-, Wand- oder Deckenbereich positioniert zu werden.

13. Dichtung (10) nach einem der vorstehenden Ansprüche,
**dadurch gekennzeichnet, dass** der Grundkörper (14) aus einem elastisch verformbaren Material ausgebildet ist.

14. Verwendung einer Dichtung (10), die einen zylindrischen Grundkörper (14) aufweist, der eine oder mehrere Dichttüllen (16, 16`) zum Abdichten des Grundkörpers (14) gegenüber der oder den durch das Bauteil (12, 12') geführten Leitung(en) aufweist, wobei der Grundkörper (14) entlang seines Umfangs (18) einen umlaufenden Umstülpkragen (20) aufweist, welcher dazu eingerichtet ist, von einer von dem zylindrischen Bauteilabschnitt (26) abgewandten Montagestellung in eine dem zylindrischen Bauteilabschnitt (26) zugewandte Abdichtstellung umgestülpt zu werden, und sich in der Abdichtstellung an den zylindrischen Bauteilabschnitt (26) anzulegen,
zum endseitigen Abdichten eines zylindrischen Bauteilabschnitts (26) eines Bauteils (12, 12'), wobei das Bauteil (12, 12') zum Durchführen einer oder mehrerer Leitungen eingerichtet ist.

15. Verwendung nach Anspruch 14,
**dadurch gekennzeichnet, dass** die Dichtung nach einem der Ansprüche 2 bis 13 ausgebildet ist.
